# EUROPEAN PATENT APPLICATION

(11) **EP 3 591 212 A1**
(43) Date of publication of application: **08.01.2020**
(21) Application number: 19182890.4
(22) Date of filing: 27.06.2019
(51) Int. Cl.: F02M 37/02, F04F 5/46, B60K 15/03, F02M 37/00

(54) **FUEL SYSTEM HAVING A JET PUMP**

(30) Priority: 02.07.2018 US 201816025742
(71) Applicant: Delphi Technologies IP Limited, Saint Michael (BB)
(72) Inventor: PORRAS, Luis M., 32545 Cd. Juarez (MX); SANCHEZ, Javier A., 32670 Ciudad Juarez (MX)
(74) Representative: Delphi France SAS

(57) **Abstract**

A fuel system (10) includes a fuel pump (16) having an inlet (42) and an outlet (44). The fuel system (10) also includes a jet pump assembly having a first fuel passage (68) defined by a first tube (70), the first fuel passage (68) having a first fuel passage inlet (50) and a first fuel passage outlet (72); and a second fuel passage (76) defined by a second tube (74) and connected to the outlet (44) of the fuel pump (16), the second fuel passage (76) having an exit orifice (82) which discharges a first flow (A) into the first fuel passage (68) which draws a second flow (B) into the first fuel passage (68) through the first fuel passage inlet (50) such that the first flow and the second flow combine in the first fuel passage (68) and exit the first fuel passage (68) through the first fuel passage outlet (72). The second fuel passage (76) also has an initial orifice (84) arranged upstream from, and in series with, the exit orifice (82).

## Description

### TECHNICAL FIELD OF INVENTION

The present invention relates to a fuel system, more particularly to a fuel system which includes a jet pump, and still even more particularly to such a jet pump.

### BACKGROUND OF INVENTION

Fuel systems for internal combustion engines typically include a fuel tank for storing a volume of fuel that will be supplied to the internal combustion engine by a fuel pump. When such fuel systems are provided for a motor vehicle, the fuel system also commonly includes a fuel reservoir positioned within the fuel tank. The fuel reservoir provides a volume of fuel which is filled by fuel from the fuel tank. The fuel pump is positioned within the fuel reservoir in order to ensure an adequate supply of fuel is available to the fuel pump when the fuel tank is not full and dynamics of the motor vehicle may cause the fuel within the fuel tank to slosh or migrate to an area of the fuel tank away from the fuel reservoir. In order to maintain a sufficient level of fuel within the fuel reservoir, a jet pump, powered by pressurized fuel from the fuel pump, is used to aspirate fuel from the fuel tank into the fuel reservoir. Known jet pumps include an orifice which dictates the flow rate of fuel through the jet pump. However, when the diameter of the orifice is less than about 0.5 mm, it may be difficult to mold the orifice as a feature of the jet pump in an injection molding operation, and consequently, the orifice must be formed by drilling which involves additional manufacturing steps, thereby adding manufacturing time and cost. The orifice may alternatively be formed during the injection molding operation, however, the orifice may be larger than desired, thereby increasing the parasitic nature of the jet pump which reduces efficiency.

What is needed is a fuel supply system and a jet pump which minimizes or eliminates one or more of the shortcomings as set forth above.

### SUMMARY OF THE INVENTION

Briefly described, a fuel system is provided for supplying fuel to a fuel consuming device. The fuel system includes a fuel pump having a fuel pump inlet and a fuel pump outlet such that the fuel pump is configured to pump fuel from the fuel pump inlet to the fuel pump outlet. The fuel system also includes a jet pump assembly having a first fuel passage defined by a first tube, the first fuel passage having a first fuel passage inlet and a first fuel passage outlet; and a second fuel passage defined by a second tube and connected to the fuel pump outlet such that the second fuel passage is in fluid communication with, and configured to receive pressurized fuel from, the fuel pump outlet. The second fuel passage has an exit orifice which extends through the second tube and is configured to discharge a first flow of fuel into the first fuel passage and create a venturi effect within the first fuel passage which draws a second flow of fuel into the first fuel passage through the first fuel passage inlet such that the first flow of fuel and the second flow of fuel combine in the first fuel passage and exit the first fuel passage through the first fuel passage outlet. The second fuel passage also has an initial orifice arranged upstream from, and in series with, the exit orifice such that the exit orifice and the initial orifice are separated by a chamber which is less restrictive than the exit orifice and which is also less restrictive than the initial orifice.

Within the fuel system the exit orifice and the initial orifice may each be centered about, and extend along, an axis.

In the fuel system one of the exit orifices and the initial orifice may be formed integrally with the second tube.

The other exit orifice and the initial orifice may be formed integrally with an insert which is fixed to the second tube.

The insert may be a plate having an outer periphery which may sealingly engage an inner periphery of the second tube.

Within the fuel system:
the exit orifice may be formed integrally with the second tube;
the initial orifice may be formed integrally with an insert which may be fixed to the second tube, the insert being a plate having an outer periphery which sealingly engages an inner periphery of the second tube.

Also within the fuel system, all fuel that passes through the exit orifice must first pass through the initial orifice.

A jet pump assembly may be provided which includes a first fuel passage defined by a first tube, the first fuel passage having a first fuel passage inlet and a first fuel passage outlet; and a second fuel passage defined by a second tube and configured to be connected to receive pressurized fuel from a fuel pump outlet of a fuel pump. The second fuel passage has an exit orifice which extends through the second tube and is configured to discharge a first flow of fuel into the first fuel passage and create a venturi effect within the first fuel passage which draws a second flow of fuel into the first fuel passage through the first fuel passage inlet such that the first flow of fuel and the second flow of fuel combine in the first fuel passage and exit the first fuel passage through the first fuel passage outlet. The second fuel passage also has an initial orifice arranged upstream from, and in series with, the exit orifice such that the exit orifice and the initial orifice are separated by a chamber which is less restrictive than the exit orifice and which is also less restrictive than the initial orifice.

A jet pump assembly as in claim 8, wherein said exit orifice (82) and said initial orifice (84) are each centered about, and extend along, an axis (82a).

In the jet pump assembly, one of the exit orifices and the initial orifice may be formed integrally with the second tube.

Also in the jet pump assembly, the other of the exit orifice and the initial orifice may be formed integrally with an insert which is fixed to the second tube.

Also in the jet pump assembly, the insert may be a plate having an outer periphery which sealingly engages an inner periphery of the second tube.

The jet pump assembly, whereby:
the exit orifice may be formed integrally with the second tube(74);
the initial orifice may be formed integrally with an insert which is fixed to the second tube, the insert being a plate having an outer periphery which sealingly engages an inner periphery of the second tube.

All fuel in the jet pump assembly that passes through the exit orifice may first pass through the initial orifice.

The fuel system and jet pump assembly disclosed herein allows for simplified manufacturing by allowing for individual orifices that are larger, and therefore easier to produce, while resulting in the same effective restriction as a single orifice which is known to be used in jet pump assemblies.

### BRIEF DESCRIPTION OF DRAWINGS

This invention will be further described with reference to the accompanying drawings in which:
FIG. 1 a schematic cross-sectional view of a fuel system in accordance with the present invention for supplying fuel to an internal combustion engine;

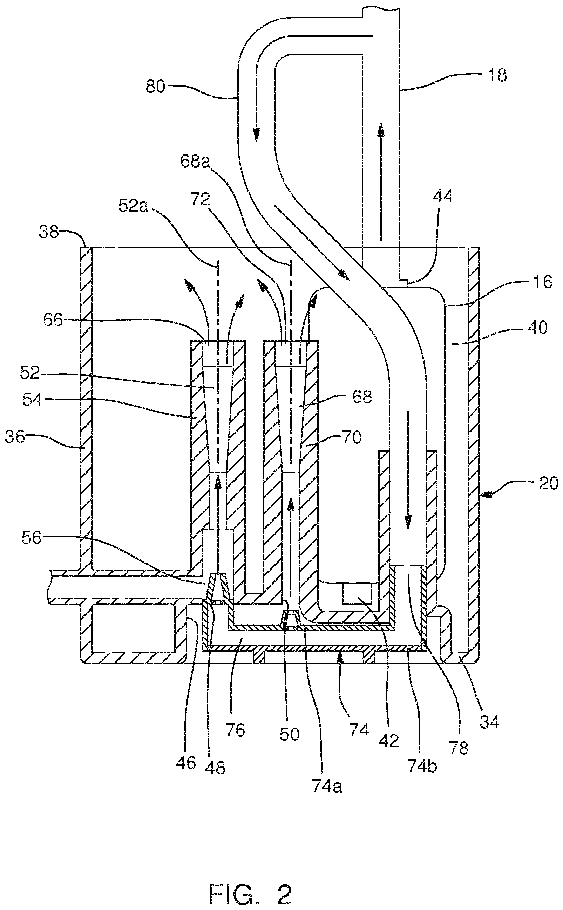

FIG. 2 is a cross-sectional view of a fuel reservoir and jet pump of the fuel system of FIG. 1; and
FIG. 3 is an enlarged portion of FIG. 2.

### DETAILED DESCRIPTION OF INVENTION

Referring to the drawings, a fuel system 10 is shown in accordance with the invention for supplying fuel to a fuel consuming device, illustrated by way of non-limiting example only, as an internal combustion engine 12. The fuel of fuel system 10 may be any liquid fuel customarily used, for example only, gasoline, diesel fuel, alcohol, ethanol, and the like, and blends thereof.

Fuel system 10 includes a fuel tank 14 for storing a quantity of fuel and a fuel pump 16 for pumping fuel from fuel tank 14 to internal combustion engine 12. Fuel that is pumped by fuel pump 16 is communicated to internal combustion engine 12 through a fuel supply line 18. Fuel pump 16 is an electric fuel pump which receives electricity from an electricity source (not shown), and may be, by way of non-limiting example only, a fuel pump as disclosed in United States Patent Application Publication No. US 2014/0314591 A1, the entire disclosure of which is incorporated herein by reference in its entirety. Fuel pump 16 is disposed within a fuel reservoir 20 which is a separate container within fuel tank 14 that is filled with fuel from fuel tank 14. When the fuel level in fuel tank 14 is sufficiently high, fuel reservoir 20 is filled by fuel simply spilling over the top of fuel reservoir 20. However, when the fuel level in fuel tank 14 is not sufficiently high to spill over the top of fuel reservoir 20, fuel reservoir 20 is filled by fuel pump 16 as will be described in greater detail later.

Fuel tank 14 will now be described in greater detail. Fuel tank 14 has a fuel tank bottom wall 22 which defines a partition 24 extending upward near the center thereof which divides fuel tank 14 into a primary fuel tank portion 14a and a secondary fuel tank portion 14b such that fuel pump 16 and fuel reservoir 20 are located within primary fuel tank portion 14a. Fuel tank 14 also includes a fuel tank sidewall 26 around the periphery of fuel tank bottom wall 22 which extends generally perpendicular upward from fuel tank bottom wall 22. Fuel tank 14 also includes a fuel tank top wall 28 which extends from fuel tank sidewall 26 in a generally perpendicular direction such that fuel tank top wall 28 opposes fuel tank bottom wall 22. Fuel tank top wall 28 includes a fuel tank opening 30 therethrough which accommodates insertion of fuel pump 16 and fuel reservoir 20 thereinto such that fuel tank opening 30 is closed by a fuel tank cover 32. Fuel tank 14 is made of a rigid material as is well known to those of skill in the art of fuel tanks, and may be, by way of non-limiting example only, a plastic material manufactured by a blow molding process.

Fuel reservoir 20 will now be described in greater detail. Fuel reservoir 20 includes a fuel reservoir bottom wall 34 and a fuel reservoir sidewall 36 which is generally annular in shape such that fuel reservoir sidewall 36 extends from fuel reservoir bottom wall 34 in a generally perpendicular direction from fuel reservoir bottom wall 34 to a top end 38 thereof which is open and which defines an overflow level of fuel reservoir 20. In this way, fuel reservoir 20 is bucket-shaped and defines a fuel reservoir volume 40 therewithin such that fuel pump 16 is disposed within fuel reservoir volume 40. Fuel is drawn into fuel pump 16 through a fuel pump inlet 42 of fuel pump 16 from fuel reservoir volume 40 and pumps the fuel to fuel supply line 18 through a fuel pump outlet 44 of fuel pump 16. Fuel reservoir bottom wall 34 includes a fuel reservoir recess 46 which faces toward fuel tank bottom wall 22 such that a first opening 48 passes through fuel reservoir bottom wall 34 into fuel reservoir recess 46 and such that a second opening 50 passes through fuel reservoir bottom wall 34 into fuel reservoir recess 46.

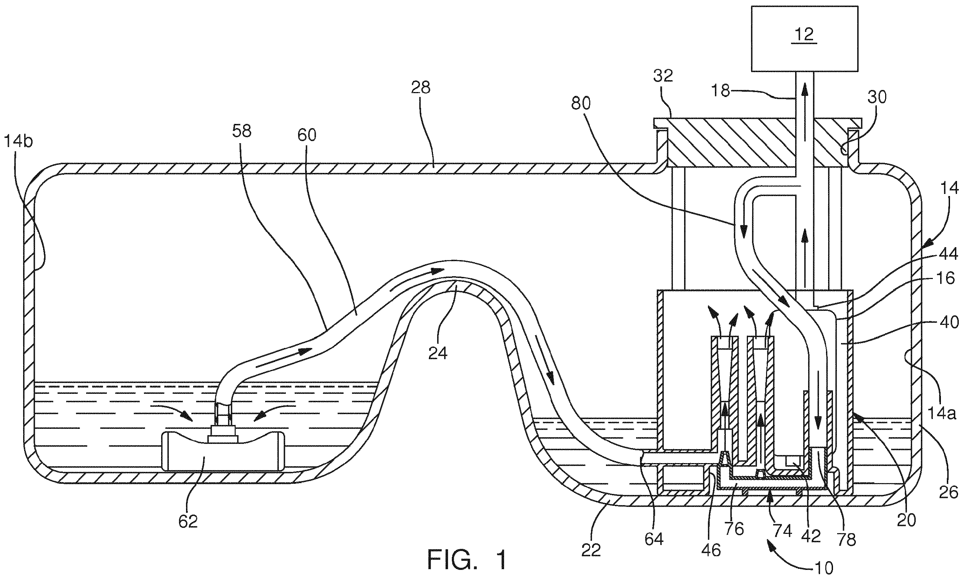

A first fuel reservoir refill passage 52 defined by a first fuel reservoir refill tube 54 is located within fuel reservoir volume 40 such that first opening 48 opens into first fuel reservoir refill passage 52 and such that first fuel reservoir refill passage 52 is centered about, and extends along, a first fuel reservoir refill passage axis 52a. As shown, first fuel reservoir refill tube 54 may be molded as a single piece of plastic with fuel reservoir 20, but may alternatively be formed separately and subsequently fixed to fuel reservoir 20. First fuel reservoir refill passage 52 includes a first fuel reservoir refill passage inlet 56. A transfer tube 58 defines a transfer fuel passage 60 having a transfer fuel passage inlet 62, depicted in FIG. 1 as a strainer, located within secondary fuel tank portion 14b and also having a transfer fuel passage outlet 64 which is connected to first fuel reservoir refill passage inlet 56. First fuel reservoir refill passage 52 includes a first fuel reservoir refill passage outlet 66 which opens into fuel reservoir volume 40. First fuel reservoir refill passage 52 is used to refill fuel reservoir volume 40 with fuel from secondary fuel tank portion 14b as will be described in greater detail later.

A second fuel reservoir refill passage 68 defined by a second fuel reservoir refill tube 70 is located within fuel reservoir volume 40 such that second opening 50 opens into second fuel reservoir refill passage 68 and such that second fuel reservoir refill passage 68 is centered about, and extends along, a second fuel reservoir refill passage axis 68a. As shown, second fuel reservoir refill tube 70 may be molded as a single piece of plastic with fuel reservoir 20, but may alternatively be formed separately and subsequently fixed to fuel reservoir 20. Second fuel reservoir refill passage 68 is open to fuel reservoir recess 46 through second opening 50, and in this way, second opening 50 serves as an inlet to second fuel reservoir refill passage 68. Second fuel reservoir refill passage 68 includes a second fuel reservoir refill passage outlet 72 which opens into fuel reservoir volume 40. Second fuel reservoir refill passage 68 is used to refill fuel reservoir volume 40 with fuel from primary fuel tank portion 14a as will be described in greater detail later.

In order to refill fuel reservoir volume 40 with fuel from primary fuel tank portion 14a and secondary fuel tank portion 14b, a jet pump 74 is provided which is a tube defining a jet pump fuel passage 76. As shown, jet pump 74 may comprise a jet pump upper portion 74a and a jet pump lower portion 74b which are sealingly joined together to define jet pump fuel passage 76, where the two-piece nature allows for manufacturing jet pump 74 using conventional injection molding processes. Jet pump 74 includes a jet pump inlet 78 which is connected to fuel pump outlet 44 such that jet pump fuel passage 76 receives pressurized fuel from fuel pump outlet 44 through a jet pump supply line 80. As shown, jet pump supply line 80 branches off from fuel supply line 18, but may alternatively receive fuel from fuel pump 16 through a dedicated outlet or may receive fuel from fuel pump 16 through a fuel return line from internal combustion engine 12 which communicates unused fuel back to fuel tank 14. Jet pump 74, together with first fuel reservoir refill passage 52 and second fuel reservoir refill passage 68, define a jet pump assembly. While jet pump 74 has been illustrated herein as being formed as a separate component from first fuel reservoir refill passage 52 and second fuel reservoir refill passage 68, it should now be understood that jet pump 74 may alternatively be integrally formed as a single piece with one or more of first fuel reservoir refill passage 52 and second fuel reservoir refill passage 68 such that jet pump 74 is still identifiable as a tube distinct from the tubes which form first fuel reservoir refill passage 52 and second fuel reservoir refill passage 68.

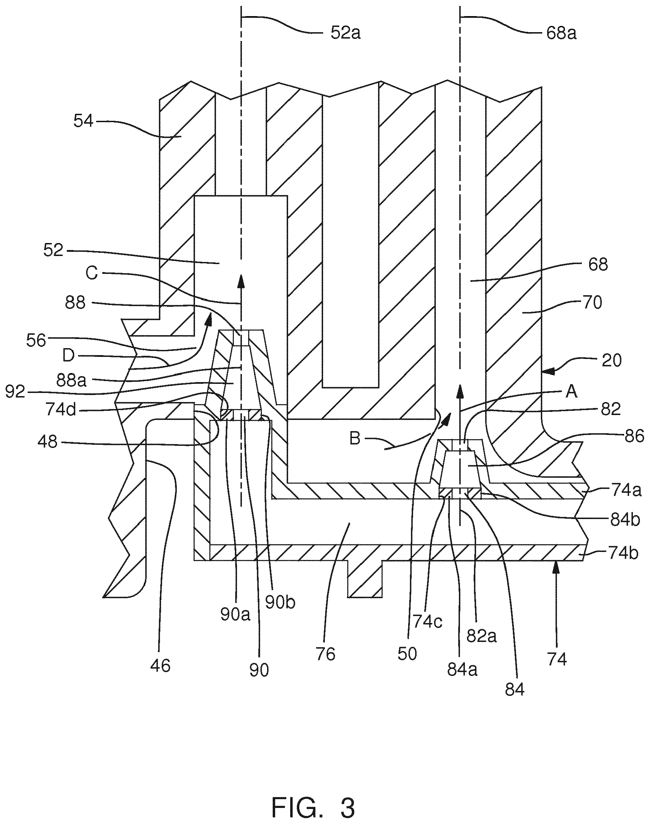

Jet pump 74 includes a jet pump primary fuel tank portion exit orifice 82 which extends therethrough, i.e. through the wall of jet pump 74, to define an outlet of jet pump fuel passage 76. Jet pump primary fuel tank portion exit orifice 82 is centered about, and extends along, a jet pump primary fuel tank portion exit orifice axis 82a such that jet pump primary fuel tank portion exit orifice axis 82a is coincident with second fuel reservoir refill passage axis 68a. Jet pump primary fuel tank portion exit orifice 82 is directed into second fuel reservoir refill passage 68, and consequently, fuel (indicated by fuel flow arrow A in FIG. 3) that exits jet pump 74 through jet pump primary fuel tank portion exit orifice 82 creates a venturi effect within second fuel reservoir refill passage 68 which draws fuel (indicated by fuel flow arrow B in FIG. 3) into second fuel reservoir refill passage 68 through second opening 50. The fuel drawn into second fuel reservoir refill passage 68 through second opening 50 combines with the fuel directed into second fuel reservoir refill passage 68 from jet pump primary fuel tank portion exit orifice 82 and exits second fuel reservoir refill passage 68 through second fuel reservoir refill passage outlet 72 to refill fuel reservoir volume 40. A jet pump primary fuel tank portion initial orifice 84 is provided upstream from, and in series with, jet pump primary fuel tank portion exit orifice 82 such that jet pump primary fuel tank portion exit orifice 82 and jet pump primary fuel tank portion initial orifice 84 are separated by a jet pump primary fuel tank portion chamber 86. Jet pump primary fuel tank portion chamber 86 is less restrictive than jet pump primary fuel tank portion exit orifice 82 and is also less restrictive than jet pump primary fuel tank portion initial orifice 84, i.e. the cross-sectional area of jet pump primary fuel tank portion chamber 86 taken perpendicular to jet pump primary fuel tank portion exit orifice axis 82a is greater than the cross-sectional area of jet pump primary fuel tank portion exit orifice 82 and is also greater than the cross-sectional area of jet pump primary fuel tank portion initial orifice 84. As shown, jet pump primary fuel tank portion initial orifice 84 may be centered about, and extend along, jet pump primary fuel tank portion exit orifice axis 82a. Also as shown, jet pump primary fuel tank portion exit orifice 82 and jet pump primary fuel tank portion initial orifice 84 may have the same cross-sectional area, for example, by having a common diameter as illustrated, however, the cross-sectional area of one of jet pump primary fuel tank portion exit orifice 82 and jet pump primary fuel tank portion initial orifice 84 may be as much as double the cross-sectional area of the other of jet pump primary fuel tank portion exit orifice 82 and jet pump primary fuel tank portion initial orifice 84. One of jet pump primary fuel tank portion exit orifice 82 and jet pump primary fuel tank portion initial orifice 84 may be formed integrally with jet pump upper portion 74a while the other of jet pump primary fuel tank portion exit orifice 82 and jet pump primary fuel tank portion initial orifice 84 may be formed integrally with a separate element which is subsequently fixed to jet pump upper portion 74a. As shown, jet pump primary fuel tank portion exit orifice 82 may be formed integrally with jet pump upper portion 74a, i.e. jet pump primary fuel tank portion exit orifice 82 extends through the material which forms jet pump upper portion 74a. Also as shown, jet pump primary fuel tank portion initial orifice 84 is formed integrally with a jet pump primary fuel tank portion initial orifice insert 84a which is fixed to jet pump upper portion 74a. Jet pump primary fuel tank portion initial orifice insert 84a is a plate which includes an outer periphery 84b which sealingly engages an inner periphery 74c of jet pump upper portion 74a. In this way, all fuel that passes through jet pump primary fuel tank portion exit orifice 82 must first pass through jet pump primary fuel tank portion initial orifice 84. Jet pump primary fuel tank portion initial orifice insert 84a may be fixed to jet pump upper portion 74a, by way of non-limiting example only, by interference fit, adhesive, welding, staking, combinations thereof, and the like. By providing jet pump primary fuel tank portion exit orifice 82 and jet pump primary fuel tank portion initial orifice 84 in series, each of jet pump primary fuel tank portion exit orifice 82 and jet pump primary fuel tank portion initial orifice 84 may be formed larger than a single orifice while collectively providing the same restriction as a single orifice. In this way, jet pump primary fuel tank portion exit orifice 82 and jet pump primary fuel tank portion initial orifice 84 may be more easily manufactured than a single orifice of smaller size without decreasing the overall restriction which would lead to higher parasitic loss in operation.

A portion of jet pump 74 extends into first opening 48 of fuel reservoir bottom wall 34 and includes a jet pump secondary fuel tank portion exit orifice 88 which extends therethrough, i.e. through the wall of the jet pump 74, to define another outlet. The portion of jet pump 74 which extends into first opening 48 fits tightly with first opening 48 so as to prevent fuel from passing between the interface of first opening 48 and jet pump 74. Jet pump secondary fuel tank portion exit orifice 88 is centered about, and extends along, a jet pump secondary fuel tank portion exit orifice axis 88a such that jet pump secondary fuel tank portion exit orifice axis 88a extends in the same direction as first fuel reservoir refill passage axis 52a, and preferably is coincident with first fuel reservoir refill passage axis 52a, i.e. first fuel reservoir refill passage 52 and jet pump secondary fuel tank portion exit orifice 88 share the same axis. Jet pump secondary fuel tank portion exit orifice axis 88a, and consequently jet pump secondary fuel tank portion exit orifice 88, is directed into first fuel reservoir refill passage 52, and consequently, fuel (indicated by fuel flow arrow C in FIG. 3) that exits jet pump 74 through jet pump secondary fuel tank portion exit orifice 88 creates a venturi effect within first fuel reservoir refill passage 52 which draws fuel (indicated by fuel flow arrow D in FIG. 3) into first fuel reservoir refill passage 52 through first fuel reservoir refill passage inlet 56 from secondary fuel tank portion 14b via transfer tube 58. The fuel drawn into first fuel reservoir refill passage 52 through first fuel reservoir refill passage inlet 56 combines with the fuel directed into first fuel reservoir refill passage 52 from jet pump secondary fuel tank portion exit orifice 88 and exits first fuel reservoir refill passage 52 through first fuel reservoir refill passage outlet 66 to refill fuel reservoir volume 40. A jet pump secondary fuel tank portion initial orifice 90 is provided upstream from, and in series with, jet pump secondary fuel tank portion exit orifice 88 such that jet pump secondary fuel tank portion exit orifice 88 and jet pump secondary fuel tank portion initial orifice 90 are separated by a jet pump secondary fuel tank portion chamber 92. Jet pump secondary fuel tank portion chamber 92 is less restrictive than jet pump secondary fuel tank portion exit orifice 88 and is also less restrictive than jet pump secondary fuel tank portion initial orifice 90, i.e. the cross-sectional area of jet pump secondary fuel tank portion chamber 92 taken perpendicular to jet pump secondary fuel tank portion exit orifice axis 88a is greater than the cross-sectional area of jet pump secondary fuel tank portion exit orifice 88 and is also greater than the cross-sectional area of jet pump secondary fuel tank portion initial orifice 90. As shown, jet pump secondary fuel tank portion initial orifice 90 may be centered about, and extend along, jet pump secondary fuel tank portion exit orifice axis 88a. Also as shown, jet pump secondary fuel tank portion exit orifice 88 and jet pump secondary fuel tank portion initial orifice 90 may have the same cross-sectional area, for example, by having a common diameter as illustrated, however, the cross-sectional area of one of jet pump secondary fuel tank portion exit orifice 88 and jet pump secondary fuel tank portion initial orifice 90 may be as much as double the cross-sectional area of the other of jet pump secondary fuel tank portion exit orifice 88 and jet pump secondary fuel tank portion initial orifice 90. One of jet pump secondary fuel tank portion exit orifice 88 and jet pump secondary fuel tank portion initial orifice 90 may be formed integrally with jet pump upper portion 74a while the other of jet pump secondary fuel tank portion exit orifice 88 and jet pump secondary fuel tank portion initial orifice 90 may be formed integrally with a separate element which is subsequently fixed to jet pump upper portion 74a. As shown, jet pump secondary fuel tank portion exit orifice 88 may be formed integrally with jet pump upper portion 74a, i.e. jet pump secondary fuel tank portion exit orifice 88 extends through the material which forms jet pump upper portion 74a. Also as shown, jet pump secondary fuel tank portion initial orifice 90 is formed integrally with a jet pump secondary fuel tank portion initial orifice insert 90a which is fixed to jet pump upper portion 74a. Jet pump secondary fuel tank portion initial orifice insert 90a is a plate which includes an outer periphery 90b which sealingly engages an inner periphery 74d of jet pump upper portion 74a. In this way, all fuel that passes through jet pump secondary fuel tank portion exit orifice 88 must first pass through jet pump secondary fuel tank portion initial orifice 90. Jet pump secondary fuel tank portion initial orifice insert 90a may be fixed to jet pump upper portion 74a, by way of non-limiting example only, by interference fit, adhesive, welding, staking, combinations thereof, and the like. By providing jet pump secondary fuel tank portion exit orifice 88 and jet pump secondary fuel tank portion initial orifice 90 in series, each of jet pump secondary fuel tank portion exit orifice 88 and jet pump secondary fuel tank portion initial orifice 90 may be formed larger than a single orifice while collectively providing the same restriction as a single orifice. In this way, jet pump secondary fuel tank portion exit orifice 88 and jet pump secondary fuel tank portion initial orifice 90 may be more easily manufactured than a single orifice of smaller size without decreasing the overall restriction which would lead to higher parasitic loss in operation.

While the invention has been described in relation to fuel system 10 in which fuel reservoir 20 is filled by fuel from both primary fuel tank portion 14a and secondary fuel tank portion 14b, is should now be understood that the invention is also applicable to fuel systems in which fuel reservoir 20 is filled from a single area. In this way, jet pump 74 may include only a single outlet with orifices arranged in series.

While this invention has been described in terms of preferred embodiments thereof, it is not intended to be so limited, but rather only to the extent set forth in the claims that follow.

## Claims

1. A fuel system (10) for supplying fuel to a fuel consuming device (12), said fuel system (10) comprising:
a fuel pump (16) having a fuel pump inlet (42) and a fuel pump outlet (44) such that said fuel pump (16) is configured to pump fuel from said fuel pump inlet (42) to said fuel pump outlet (44); and
a jet pump assembly comprising:
a first fuel passage (68) defined by a first tube (70), said first fuel passage (68) having a first fuel passage inlet (50) and a first fuel passage outlet (72); and
a second fuel passage (76) defined by a second tube (74) and connected to said fuel pump outlet (44) such that said second fuel passage (76) is in fluid communication with, and configured to receive pressurized fuel from said fuel pump outlet (44), said second fuel passage (76) having an exit orifice (82) which extends through said second tube (74) and is configured to discharge a first flow of fuel (A) into said first fuel passage (68) and create a venturi effect within said first fuel passage (68) which draws a second flow of fuel (B) into said first fuel passage (68) through said first fuel passage inlet (50) such that said first flow of fuel (A) and said second flow of fuel (B) combine in said first fuel passage (68) and exit said first fuel passage (68) through said first fuel passage outlet (72), said second fuel passage (76) also having an initial orifice (84) arranged upstream from, and in series with, said exit orifice (82) such that said exit orifice (82) and said initial orifice (84) are separated by a chamber (86) which is less restrictive than said exit orifice (82) and which is also less restrictive than said initial orifice (84).

2. A fuel system (10) as in claim 1, wherein said exit orifice (82) and said initial orifice (84) are each centered about, and extend along, an axis (82a).

3. A fuel system (10) as in claims 1 and 2, wherein one of said exit orifice (82) and said initial orifice (84) is formed integrally with said second tube (74).

4. A fuel system (10) as in claim 3, wherein the other of said exit orifice (82) and said initial orifice (84) is formed is formed integrally with an insert (84a) which is fixed to said second tube (74).

5. A fuel system (10) as in claim 4, wherein said insert (84a) is a plate having an outer periphery (84b) which sealingly engages an inner periphery (74c) of said second tube (74).

6. A fuel system (10) as in claim 3, wherein:
said exit orifice (82) is formed integrally with said second tube (74);
said initial orifice (84) is formed integrally with an insert (84a) which is fixed to said second tube (74), said insert (84a) being a plate having an outer periphery (84b) which sealingly engages an inner periphery (74c) of said second tube (74).

7. A fuel system (10) as in claim 1, wherein all fuel that passes through said exit orifice (82) must first pass through said initial orifice (84).

8. A jet pump assembly comprising:
a first fuel passage (68) defined by a first tube (70), said first fuel passage (68) having a first fuel passage inlet (50) and a first fuel passage outlet (72); and
a second fuel passage (76) defined by a second tube (74) and configured to be connected to receive pressurized fuel from a fuel pump outlet (44) of a fuel pump (16), said second fuel passage (76) having an exit orifice (82) which extends through said second tube (74) and is configured to discharge a first flow of fuel (A) into said first fuel passage (68) and create a venturi effect within said first fuel passage (68) which draws a second flow of fuel (B) into said first fuel passage (68) through said first fuel passage inlet (50) such that said first flow of fuel (A) and said second flow of fuel (B) combine in said first fuel passage (68) and exit said first fuel passage (68) through said first fuel passage outlet (72), said second fuel passage (76) also having an initial orifice (84) arranged upstream from, and in series with, said exit orifice (82) such that said exit orifice (82) and said initial orifice (84) are separated by a chamber (86) which is less restrictive than said exit orifice (82) and which is also less restrictive than said initial orifice (84).

9. A jet pump assembly as in claim 8, wherein said exit orifice (82) and said initial orifice (84) are each centered about, and extend along, an axis (82a).

10. A jet pump assembly as in claim 8, wherein one of said exit orifice (82) and said initial orifice (84) is formed integrally with said second tube (74).

11. A jet pump assembly as in claim 10, wherein the other of said exit orifice (82) and said initial orifice (84) is formed is formed integrally with an insert (84a) which is fixed to said second tube (74).

12. A jet pump assembly as in claim 11, wherein said insert (84a) is a plate having an outer periphery (84b) which sealingly engages an inner periphery (74c) of said second tube (74).

13. A jet pump assembly as in claim 10, wherein:
said exit orifice (82) is formed integrally with said second tube (74);
said initial orifice (84) is formed integrally with an insert (84a) which is fixed to said second tube (74), said insert (84a) being a plate having an outer periphery (84b) which sealingly engages an inner periphery (74c) of said second tube (74).

14. A jet pump assembly as in claim 8, wherein all fuel that passes through said exit orifice (82) must first pass through said initial orifice (84).
